# EUROPEAN PATENT SPECIFICATION

(11) **EP 3 414 408 B1**
(45) Date of publication and mention of the grant of the patent: **30.04.2025**
(21) Application number: 17750517.9
(22) Date of filing: 06.02.2017
(51) Int. Cl.: E04C 3/00

(54) **A SANDWICH CONSTRUCTION ELEMENT WITH AN OPEN CORE STRUCTURE COMPOSED OF CLOSE PACKED TETRAHEDRA**
SANDWICHKONSTRUKTIONSELEMENT MIT EINER OFFENEN KERNSTRUKTUR AUS DICHT GEPACKTEM TETRAHEDRA
ÉLÉMENT DE CONSTRUCTION EN SANDWICH COMPRENANT UNE STRUCTURE D'ÂME OUVERTE COMPOSÉE DE TÉTRAÈDRES COMPACTS

(30) Priority: 08.02.2016 SE 1650152
(43) Date of publication of application: 19.12.2018
(73) Proprietor: Nitiu AB, 801 06 Gävle (SE)
(72) Inventor: STOCKFELT, Michail, 804 30 GÄVLE (SE)
(74) Representative: Brann AB
(86) International application number: PCT/SE2017/050106
(87) International publication number: WO 2017/138864

(56) References cited:
- WO-A2-02/10535
- WO-A2-2011/025268
- US-A- 3 237 362
- US-A- 3 296 767
- US-A- 3 831 503
- US-A- 4 967 533
- US-A1- 2010 323 181
- US-A1- 2012 159 895
- US-A1- 2012 159 895

## Description

### TECHNICAL FIELD

The present invention relates to a sandwich construction element, and more particularly to a sandwich construction element with an open core.

### BACKGROUND OF THE INVENTION

A problem during design of for example a ship, encountered today is that if for example a hull of a ship is manufactured with modern alloys and design, the hull becomes lightweight and strong. But the deck and the various vertical and horizontal walls used in the construction of a ship becomes heavy weight if standard design is used. Therefore, a need for lightweight and sturdy panels of various dimensions and areas exists.

A promising design for such panels is disclosed in US 8,650,756 B2 which provides a solution that involves either extrusion of panels or additive/subtractive manufacturing. If extrusion is used the available materials for construction is rather limited and a lightweight alloy, such as an alumina alloy would be the most likely candidate. However, if the hull of the ship is manufactured in stainless-steel there is a problem related to joining alumina alloys and stainless steel. There exists an alternative to manufacture panels using additive/subtractive manufacturing, but this alternative is rather expensive if large panels are desired.

Furthermore, the truss design used in US 8,650,756 B2 is rather weak and leaves room for improvement. One of its advantages is that the core of the sandwich material may be formed by bending a metal net to a pyramidal lattice. It is well known in solid mechanics that this truss structure is far from optimal from a structural strength point of view, for example if one of the base corners of the pyramidal lattice is subjected to momentum.

In document US3296767 (LEBOWITZ) a structure having a symmetric tetrahedron with 60° sloping sides. The structure uses an "octa-tetra" arrangement where every second volume is an octaeder rather than a tetrahedron. The structure has the disadvantage of not being fully triangulated. Further disadvantages are bending at joints and difficulties in forming square blocks using the structure.

In document US212159895 (KAWECKI) a core 10 that inserted into a hollow shell 20 having strictly symmetrical interior tetrahedrons is shown. I.e., each side of the symmetrical interior tetrahedrons having sides with equilateral triangles. This have similar disadvantages as described above.

In document US3237362 (FROMSON) a single-row beam of tetrahedrons formed from creasing a cylindrical tube is shown. The structure uses folding and creasing of sheets and tubes, limiting the structure to soft and malleable materials.

In document US2010323181 (NUTT) a structure including carbon fiber spring members in the shape of beams not having fully triangulated sections. This have similar disadvantages as described above.

It is an object of the present invention to provide a solution that is compatible with modern ship design that involves lightweight hulls.

It is another object of the present invention to provide a more robust and sturdy sandwich construction that simultaneously provides very low density.

It is another object of the present invention to provide a sandwich construction that provides excellent resistance against corrosive agents or environments.

### SUMMARY OF THE INVENTION

According to the present invention, the above mentioned objects and other advantages are obtained by providing a sandwich construction element according to the independent claim.

The invention is set out in the appended set of claims.

The terms "flat", "close packed", and "unit cell" as used herein are to be interpreted in a broad sense. The term "flat" should be interpreted as essentially flat. The term "close packed" should be interpreted as fully packed, unit cell should be interpreted as an element used to close pack a volume i.e., to completely fill the volume with unit cells.

A more complete understanding of the invention, as well as further features and advantageous thereof, will be obtained by reference to the following detailed description and drawings.

### BRIEF DESCRIPTION OF THE DRAWINGS

Fig. 1 is an exploded schematic perspective view of an embodiment of a sandwich structure according to the present invention.
Fig. 2 is a schematic perspective view of an embodiment sandwich construction according to the present invention.
Fig. 3 is a schematic perspective view of a unit cell according to the present invention.
Fig. 4 is a schematic plan view of parallelograms according to the present invention.
Fig. 5 is a planar view of an embodiment of a flat array according to the present invention.
Fig. 6 is a schematic perspective view of an embodiment of a flat array according to the present invention.

### DETAILED DESCRIPTION OF THE INVENTION

The following description is for illustration and exemplification of the invention only and is not intended to limit the invention to the specific embodiments described.

Unless defined otherwise, technical and scientific terms have the same meaning as commonly understood by one of ordinary skill in the art to which this invention belongs.

The meaning of the terms "flat", "close packed" and "unit cell" as used herein are as follows.

The term "flat" should be interpreted as essentially flat.

The term "close packed" means that a volume is completely filled with a basic construction in a symmetric and repetitive way.

The "unit cell" is the basic geometry used for close packing of a volume.

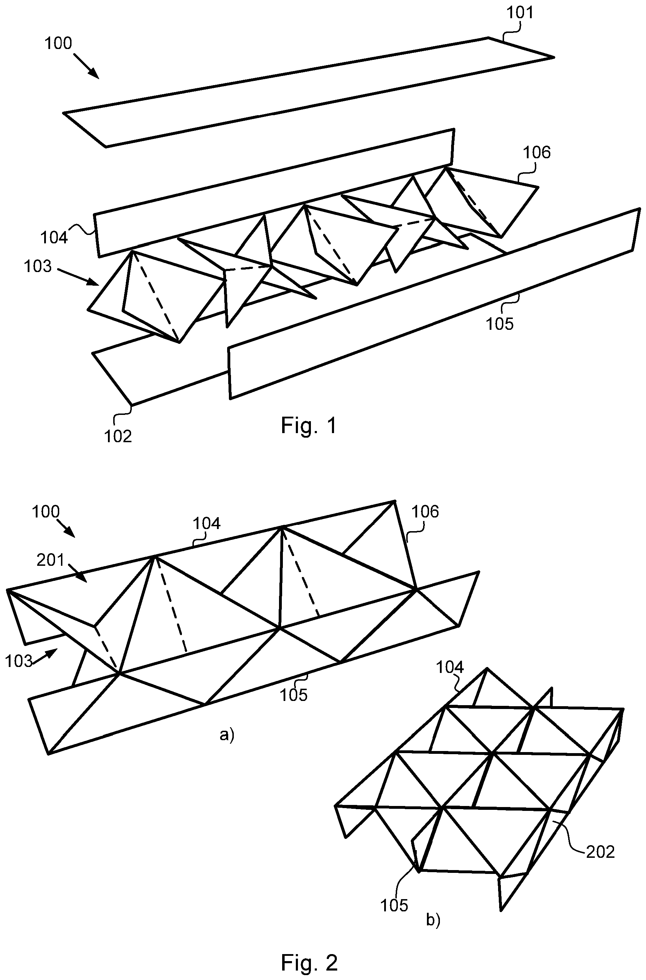

Fig. 1 shows an exploded perspective view of a sandwich construction element, generally designated 100, according to a first embodiment of the present invention. The sandwich construction element 100 comprises a first element 101 with a flat face and a second element 102 with a flat face being parallel and facing the flat face of the first element 101. The sandwich construction element further comprises an open core structure 103 arranged between the first element 101 and the second element 102. The open core structure 103 is operatively connected to the first element 101 and the second element 102.

The open core structure 103 comprises a plurality of close packed tetrahedrons structures 201.

Furthermore, the open core structure comprises at least two flat elements 104, 105 arranged between the first element 101 and the second element 101. The at least two flat elements 104, 105 are arranged perpendicular to the flat faces of the first element 101 and the second element 102, and facing each other with a first distance between the two flat elements 104, 105.

The two flat elements 104, 105 and the first element 101 and the second element 102 define a box shaped volume. This volume is filled with unit cells 106 in a repetitive pattern as shown exploded in Fig. 1.

In Fig. 2a the sandwich construction element 100 is shown with the unit cells 106 packed together. In this Fig. 2a it is shown that by packing the unit cells together the box shaped volume is close packed filled with tetrahedron structures 201. In this figure the first element 101 and the second element 102 are not shown since they would obstruct the perspective view of the tetrahedron structures 201. In Fig 2b an additional flat element 202 is added to the at least two flat elements 104, 105 at a distance equal to the first distance, and the volume defined by the flat elements 105, 202 is close packed with tetrahedron structures. By adding more flat elements and unit cells panels of arbitrary sizes can be formed in a repetitive pattern.

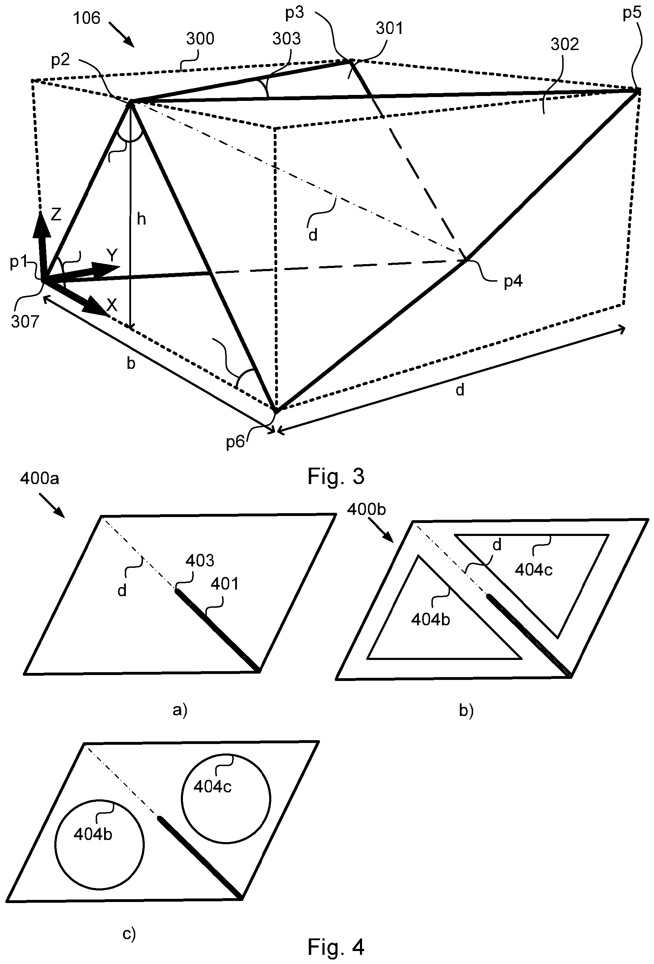

In Fig. 3 the unit cell 106 is shown in a perspective view with an added imaginary dotted box 300 as a help structure. The dotted box 300 has a width of b, a depth of d and a height of h in arbitrary units. In a first corner 307 is a coordinate system defined with an X axis along the base line of the width direction of the box 300, a Y axis extends along the baseline of the depth direction of the box 300, and a Z axis extends along the baseline of the height direction of the box 300. In order to define the unit cell 106 six points are needed. These six points are as follows p1=[0,0,0], p2=[b/2,0,h], p3=[0,d,h], p4=[b/2,d,0], p5=[b,d,h], and p6=[b,0,0], where [x coordinate, y coordinate, z coordinate].

As can be seen from figure 3, the six points in the unit cell, defined above, define two tetrahedrons sharing a diagonal spine. The tetrahedrons may have an XZ plane that is perpendicular to the XY plane and are thus asymmetric tetrahedrons.

Fig. 3 shows that a first parallelogram 301 is formed by point's p2, p3, p4 and p6. A second parallelogram 302 is formed by p1, p2, p5, and p4. These two flat parallelograms 301, 302 are arranged in an overlapping intersecting relation along a diagonal d between point's p2 and p4, with an angle 303 between the two flat parallelograms 301, 302. From this figure a triangle is identified in the XZ-plane between point's p1, p2 and p6 and from a solid mechanics point of view this triangle is most preferably an equilateral triangle.

In a unit cell according to the present disclosure, a volume is formed between the tetrahedrons, which is asymmetric and have two of the planes perpendicular. This has the advantage that a pattern with unit cells that alternate orientation can create a rectangular parallelepiped. I.e. a volume with parallel sides which is good or advantageous, e.g. for generating sheets, plates, columns and beam profiles. This is in contrast to a unit cell based on symmetric tetrahedrons. A symmetric tetrahedron is defined as having four equilateral triangle faces, where every in-plane angle is 60° and every edge is of equal length. Symmetric tetrahedrons cannot easily be assembled in a pattern that gives flat, parallel sides. Now with reference made to Fig. 4a-c different embodiments of the parallelograms 301, 302 will be discussed.

In Fig. 4a a first embodiment of a parallelogram 400a is disclosed. The parallelogram 400a comprises a slit 401 along the diagonal d of the parallelogram from a corner to at least the center 403 of the parallelogram.

The slit 401 is configured to receive a corresponding parallelogram 400a with a slit 401 such that the two parallelograms are joined along the diagonal of each parallelogram, such that the end portions of the slit of the two parallelograms overlaps.

The parallelogram is also asymmetric as two of the sides are longer than the other two, thereby forming a tilted rectangle. When two such parallelograms are joined, e.g. by bringing one into the other via the slits, they create a cross that shape or form the diagonal back of two tetrahedrons.

In Fig. 4b, a second embodiment of a parallelogram 400b is disclosed. This parallelogram 400b comprises recesses 404b arranged at distance from the diagonal d. In this particular embodiment the recesses are triangles but other shapes are of course possible such as holes 404b and 404c as disclosed in Fig. 4c.

The purpose of the recesses may be to provide a more lightweight structure, or for allowing fluid communication between the unit cells. In one embodiment the at least two flat elements comprises recesses for the same purposes.

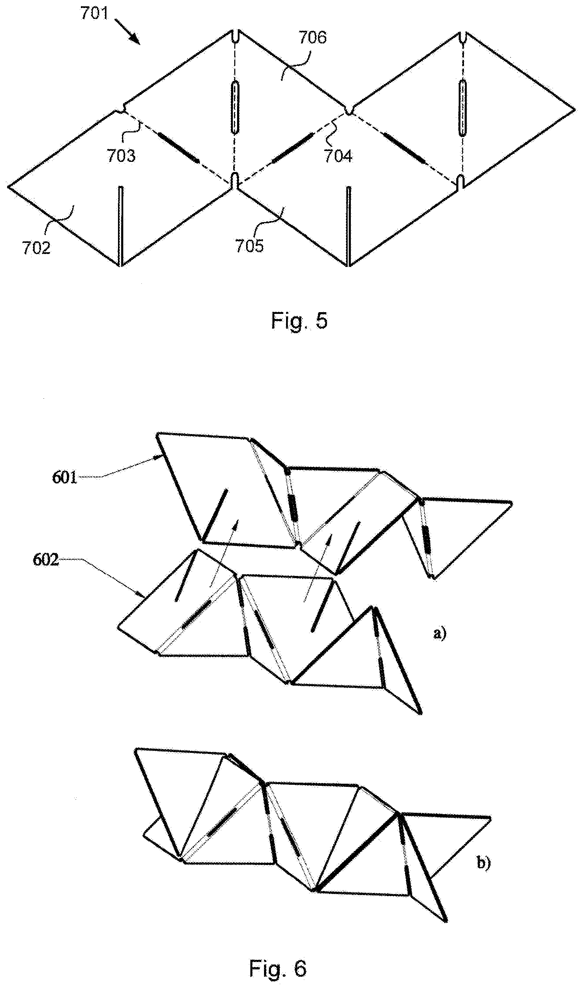

The parallelogram may also comprise tabs along the sides of the parallelogram facing the at least two flat elements, wherein the flat elements comprises corresponding recesses. In this way, the unit cells may be operatively connected to the at least two flat elements. In one embodiment the unit cells are operatively connected to the first and the second element, with for example a welded joint or an adhesive. Fig. 5 discloses a flat array 701 of parallelograms 702, 705 with intermediate parallelograms 706. This flat array 701 forms a repeating triangular wave pattern by a first parallelogram 702 having a first edge 703 operatively connected to an edge of an intermediate parallelogram 706.

In one embodiment, the flat array may comprise folding lines along the common edges 703,704 between adjacent first parallelogram and intermediate parallelogram, wherein the intermediate parallelogram comprises a folding line along its short diagonal.

By bending the parallelograms of a first flat array and a second flat array, along the edges 703 in a first angle and the intermediate parallelograms along the short diagonals in a second angle, a bended array that can be used to obtain an array of unit cells is formed.

In Fig. 6a is a bended first array 601 arranged opposite a bended second array 602, with corresponding recesses aligned to each other. By joining theses arrays 601, 602 an array of unit cells are formed. This has the effect that a large number of unit cells may be efficiently manufactured.

In one embodiment, the sandwich construction element comprises sheet metal. And in a preferred embodiment the sheet metal is stainless steel. This way the sandwich construction element may be efficiently integrated with a modern hull of a ship.

In one embodiment of the sandwich construction, the unit cells of the open cell core is operatively connected to the at least two flat elements by means of tabs extending from the unit cells into corresponding grooves in the at least two flat elements.

In one embodiment of the sandwich construction element the unit cells of the open cell core is operatively connected to the first element and the second element by means of an adhesive.

In one embodiment of the sandwich construction element the unit cells of the open cell core is operatively connected to the first element and the second element by means of welding.

The present invention is not limited to the above-described preferred embodiments. Various alternatives, modifications and equivalents may be used. Therefore, the above embodiments should not be taken as limiting the scope of the invention, which is defined by the appending claims.

## Claims

1. A sandwich construction element (100), comprising:
- a first element (101) with a face, extending in a longitudinal direction with a thickness and a height being smaller than the longitudinal length;
- a second element (102) with a face, extending in the same longitudinal direction as the first element with a thickness and a height being smaller than the longitudinal length, wherein the second element is facing the face of the first element (101);
- an open core structure (103) arranged between, and operatively connected to the first element (101) and the second element (102), wherein the open core structure comprises a plurality of close packed tetrahedron structures (201), wherein the tetrahedron structures (201) are asymmetric and are arranged to form one or more unit cells (106) with six points defining two tetrahedrons sharing a diagonal spine, wherein each tetrahedron has a plane that is perpendicular to another, wherein each tetrahedron is an asymmetric tetrahedron, wherein a volume is formed by said two tetrahedrons and wherein said two tetrahedrons define two parallelograms (301, 302, 400a-c), arranged in an overlapping intersection relation along a diagonal wherein each of the parallelograms (301, 302, 400a-c) comprises a slit (401) along said diagonal (402) from a corner to at least a center (403) of the parallelogram, wherein the slit is configured to receive a corresponding parallelogram with a slit (401) such that the end portions of the slit of the two parallelograms overlap.

2. The sandwich construction element according to claim 1, wherein the open core structure comprises at least two flat elements (104, 105) arranged between the first element (101) and the second element (102), wherein the at least two flat elements (104, 105) are arranged between the faces of the first element (101) and the second element (102), and facing each other with a first distance between the two elements (104, 105).

3. The sandwich construction element according to claim 2, wherein the open core structure comprises a plurality of unit cells (106) arranged between two of the at least two flat elements (104, 105), wherein each unit cell comprises two flat parallelogram (301, 302) arranged in an overlapping intersecting relation along a diagonal of the two flat parallelogram (301, 302), with an angle (303) between the two flat parallelogram (301, 302).

4. The sandwich construction element according to any of claims 1-3, wherein each of the parallelograms of the unit cell (106) comprises a recess arranged at a distance from the diagonal.

5. The sandwich construction element according to any of claims 1-4, wherein the diagonal is the shortest diagonal of the two flat parallelograms (301, 302).

6. The sandwich construction element according to any preceding claim, wherein the face of the first element (101), and the face of the second element (102) are flat.

7. The sandwich construction element according to claim 6, wherein the at least two flat elements (104, 105) are arranged perpendicular to the flat faces of the first element (101) and the second element (102),

8. The sandwich construction element with according to any of claim 3 to 7, wherein the plurality of unit cells are formed by two flat arrays, wherein each flat array (701) comprises a repeating triangular wave pattern formed by a first parallelogram (702) having a first edge (703) operatively connected to an edge of an intermediate parallelogram.

9. The sandwich construction element according to claim 6, wherein the flat array (701) comprises folding lines along the common edges (703,704) between adjacent first parallelogram and intermediate parallelogram, wherein the intermediate parallelogram comprises a folding line along its short diagonal.

10. The sandwich construction element according to any preceding claims, wherein the sandwich construction comprises sheet metal.

11. The sandwich construction element according to claim 10 wherein the sheet metal is stainless steel.

12. The sandwich construction element according to any preceding claims, wherein the unit cells of the open cell core is operatively connected to the at least two flat elements by means of tabs extending from the unit cells into corresponding grooves in the at least two flat elements.

13. The sandwich construction element according to any preceding claims, wherein the unit cells of the open cell core is operatively connected to the first element and the second element by means of an adhesive.

14. The sandwich construction element according to any of claims 1 to 13, wherein the unit cells of the open cell core is operatively connected to the first element and the second element by means of welding.

## Patentansprüche

1. Sandwichkonstruktionselement (100), das aufweist:
- ein erstes Element (101) mit einer Stirnseite, das sich in einer Längsrichtung erstreckt, wobei seine Dicke und seine Höhe kleiner als die Länge in Längsrichtung sind;
- ein zweites Element (102) mit einer Stirnseite, das sich in die gleiche Längsrichtung wie das erste Element erstreckt, wobei seine Dicke und seine Höhe kleiner als die Länge in Längsrichtung sind, wobei das zweite Element der Stirnseite des ersten Elements (101) zugewandt ist;
- eine offene Kernstruktur (103), die dazwischen angeordnet ist und betriebsfähig mit dem ersten Element (101) und dem zweiten Element (102) verbunden ist, wobei die offene Kernstruktur mehrere dicht gepackte Tetraederstrukturen (201) aufweist, wobei die Tetraederstrukturen (201) asymmetrisch sind und derart angeordnet sind, dass sie eine oder mehrere Einheitszellen (106) bilden, bei denen sechs Punkte zwei Tetraeder definieren, die einen diagonalen Grat gemeinsam haben, wobei jedes Tetraeder eine Ebene hat, die senkrecht zu einer anderen ist, wobei jedes Tetraeder ein asymmetrisches Tetraeder ist, wobei durch die zwei genannten Tetraeder ein Volumen gebildet wird und wobei diese zwei Tetraeder zwei Parallelogramme (301, 302, 400a-c) definieren, die in einer überlappenden Schnittbeziehung entlang einer Diagonalen angeordnet sind, wobei jedes der Parallelogramme (301, 302, 400a-c) einen Schlitz (401) entlang der genannten Diagonalen (402) von einer Ecke mindestens zu einer Mitte (403) des Parallelogramms aufweist, wobei der Schlitz konfiguriert ist, um ein entsprechendes Parallelogramm mit einem Schlitz (401) aufzunehmen, so dass die Endabschnitte des Schlitzes der beiden Parallelogramme überlappen.

2. Sandwichkonstruktionselement nach Anspruch 1, wobei die offene Kernstruktur mindestens zwei flache Elemente (104, 105) aufweist, die zwischen dem ersten Element (101) und dem zweiten Element (102) angeordnet sind, wobei die mindestens zwei flachen Elemente (104, 105) zwischen den Stirnseiten des ersten Elements (101) und des zweiten Elements (102) angeordnet sind und einander mit einem Abstand zwischen den zwei Elementen (104, 105) zugewandt sind.

3. Sandwichkonstruktionselement nach Anspruch 2, wobei die offene Kernstruktur mehrere Einheitszellen (106) aufweist, die zwischen zwei der mindestens zwei flachen Elemente (104, 105) angeordnet sind, wobei jede Einheitszelle zwei flache Parallelogramme (301, 302) aufweist, die in einer überlappenden Schnittbeziehung entlang einer Diagonale der zwei flachen Parallelogramme (301, 302) mit einem Winkel (303) zwischen den zwei flachen Parallelogrammen (301, 302) angeordnet sind.

4. Sandwichkonstruktionselement nach einem der Ansprüche 1 - 3, wobei jedes der Parallelogramme der Einheitszelle (106) eine Aussparung aufweist, die in einem Abstand von der Diagonalen angeordnet ist.

5. Sandwichkonstruktionselement nach einem der Ansprüche 1 - 4, wobei die Diagonale die kürzeste Diagonale der zwei flachen Parallelogramme (301, 302) ist.

6. Sandwichkonstruktionselement nach einem der vorhergehenden Ansprüche, wobei die Stirnseite des ersten Elements (101) und die Stirnseite des zweiten Elements (102) flach sind.

7. Sandwichkonstruktionselement nach Anspruch 6, wobei die mindestens zwei flachen Elemente (104, 105) senkrecht zu den flachen Stirnseiten des ersten Elements (101) und des zweiten Elements (102) angeordnet sind.

8. Sandwichkonstruktionselement nach einem der Ansprüche 3 bis 7, wobei die mehreren Einheitszellen durch zwei flache Anordnungen gebildet werden, wobei jede flache Anordnung (701) ein sich wiederholendes Dreieckswellenmuster aufweist, das durch ein erstes Parallelogramm (702) mit einer ersten Kante (703), das betriebsfähig mit einer Kante eines Zwischenparallelogramms verbunden ist, gebildet wird.

9. Sandwichkonstruktionselement nach Anspruch 6, wobei die flache Anordnung (701) Faltlinien entlang der gemeinsamen Kanten (703, 704) zwischen dem benachbarten ersten Parallelogramm und Zwischenparallelogramm aufweist, wobei das Zwischenparallelogramm eine Faltlinie entlang seiner kurzen Diagonalen aufweist.

10. Sandwichkonstruktionselement nach einem der vorhergehenden Ansprüche, wobei die Sandwichkonstruktion Lagenmaterial aufweist.

11. Sandwichkonstruktionselement nach Anspruch 10, wobei das Lagenmaterial rostfreier Stahl ist.

12. Sandwichkonstruktionselement nach einem der vorhergehenden Ansprüche, wobei die Einheitszellen des offenen Zellenkerns mit Hilfe von Ansätzen, die sich von den Einheitszellen in entsprechende Nuten in den mindestens zwei flachen Elementen erstrecken, betriebsfähig mit den mindestens zwei flachen Elementen verbunden sind.

13. Sandwichkonstruktionselement nach einem der vorhergehenden Ansprüche, wobei die Einheitszellen des offenen Zellenkerns mittels eines Klebstoffs betriebsfähig mit dem ersten Element und dem zweiten Element verbunden sind.

14. Sandwichkonstruktionselement nach einem der Ansprüche 1 bis 13, wobei die Einheitszellen des offenen Zellenkerns mittels Schweißen betriebsfähig mit dem ersten Element und dem zweiten Element verbunden sind.

## Revendications

1. Élément de construction sandwich (100), comprenant :
- un premier élément (101) ayant une face, qui s'étend dans une direction longitudinale avec une épaisseur et une hauteur qui sont inférieures à la longueur longitudinale ;
- un deuxième élément (102) ayant une face, qui s'étend dans la même direction longitudinale que le premier élément avec une épaisseur et une hauteur qui sont inférieures à la longueur longitudinale, dans lequel le deuxième élément est en vis-à-vis de la face du premier élément (101) ;
- une structure à noyau ouvert (103) agencée entre, et connectée de façon fonctionnelle au premier élément (101) et au deuxième élément (102), dans lequel la structure à noyau ouvert comprend une pluralité de structures tétraédriques compactes (201), dans lequel les structures tétraédriques (201) sont asymétriques et sont agencées pour former une ou plusieurs cellules unitaires, où six points définissant deux tétraèdres partagent une ligne diagonale, dans lequel chaque tétraèdre est un tétraèdre asymétrique, dans lequel un volume est formé par lesdits deux tétraèdres et dans lequel lesdits deux tétraèdres définissent deux parallélogrammes (301, 302, 400a-c) agencés dans une relation d'intersection de chevauchement le long d'une diagonale dans lequel chacun des parallélogrammes plats (301, 302, 400a-c) comprend un angle (401) le long de ladite diagonale (402) allant d'un coin à au moins un centre (403) du parallélogramme, dans lequel l'angle est configuré pour recevoir un parallélogramme correspondant ayant un angle (401) tel que les parties d'extrémité de l'angle des deux parallélogrammes se chevauchent.

2. Élément de construction sandwich selon la revendication 1, dans lequel la structure à noyau ouvert comprend au moins deux éléments plats (104, 105) agencés entre le premier élément (101) et le deuxième élément (101), dans lequel les au moins deux éléments plats (104, 105) sont agencés entre les faces du premier élément (101) et du deuxième élément (102), et sont en vis-à-vis l'un de l'autre avec une première distance entre les deux éléments (104, 105).

3. Élément de construction sandwich selon la revendication 2, dans lequel la structure à noyau ouvert comprend une pluralité de cellules unitaires (106) agencées entre deux des au moins deux éléments plats (104, 105), dans lequel chaque cellule unitaire comprend deux parallélogrammes plats (301, 302) agencés dans une relation d'intersection de chevauchement le long d'une diagonale des deux parallélogrammes plats (301, 302), avec un angle (303) entre les deux parallélogrammes plats (301, 302).

4. Élément de construction sandwich selon l'une quelconque des revendications 1 à 3, dans lequel chacun des parallélogrammes de la cellule unitaire (106) comprend un évidement agencé à une distance de la diagonale.

5. Élément de construction sandwich selon l'une quelconque des revendications 1 à 4, dans lequel la diagonale est la diagonale la plus courte des deux parallélogrammes plats (301, 302).

6. Élément de construction sandwich selon l'une quelconque des revendications précédentes, dans lequel la face du premier élément (101) et la face du deuxième élément (102) sont plates.

7. Élément de construction sandwich selon la revendication 6, dans lequel les au moins deux éléments plats (104, 105) sont agencés perpendiculairement aux faces planes du premier élément (101) et du deuxième élément (102).

8. Élément de construction sandwich selon l'une quelconque des revendications 3 à 7, dans lequel la pluralité de cellules unitaires est formée par deux réseaux plats, dans lequel chaque réseau plat (701) comprend un motif d'onde triangulaire répétitif formé par un premier parallélogramme (702) ayant un premier bord (703) connecté de façon fonctionnelle à un bord d'un parallélogramme intermédiaire.

9. Élément de construction sandwich selon la revendication 6, dans lequel le réseau plat (701) comprend des lignes de pliage le long des bords communs (703, 704) entre des premier parallélogramme et parallélogramme intermédiaire adjacents, dans lequel le parallélogramme intermédiaire comprend une ligne de pliage le long de sa petite diagonale.

10. Élément de construction sandwich selon l'une quelconque des revendications précédentes, dans lequel la construction sandwich comprend une tôle.

11. Élément de construction sandwich selon la revendication 10, dans lequel la tôle est en acier inoxydable.

12. Élément de construction sandwich selon l'une quelconque des revendications précédentes, dans lequel les cellules unitaires du noyau à cellules ouvertes sont connectées de façon fonctionnelle aux au moins deux éléments plats au moyen de languettes qui s'étendent à partir des cellules unitaires dans des rainures correspondantes dans les au moins deux éléments plats.

13. Élément de construction sandwich selon l'une quelconque des revendications précédentes, dans lequel les cellules unitaires du noyau à cellules ouvertes sont connectées de façon fonctionnelle au premier élément et au deuxième élément au moyen d'un adhésif.

14. Élément de construction sandwich selon l'une quelconque des revendications 1 à 13, dans lequel les cellules unitaires du noyau à cellules ouvertes sont connectées de façon fonctionnelle au premier élément et au deuxième élément au moyen de soudage.
